# EUROPÄISCHE PATENTSCHRIFT

(11) **EP 1 671 201 B1**
(45) Veröffentlichungstag und Bekanntmachung des Hinweises auf die Patenterteilung: **06.08.2008**
(21) Anmeldenummer: 04766826.4
(22) Anmeldetag: 20.09.2004
(51) Int. Cl.: G06F 21/00

(54) **EINRÄUMUNG EINES ZUGRIFFS AUF EIN COMPUTERBASIERTES OBJEKT**
GRANTING ACCESS TO A COMPUTER-BASED OBJECT
SYSTEME D'ACCES AUTORISE A UN OBJET INFORMATISE

(30) Priorität: 30.09.2003 DE 10345486
(43) Veröffentlichungstag der Anmeldung: 21.06.2006
(73) Patentinhaber: SIEMENS AKTIENGESELLSCHAFT, 80333 München (DE)
(72) Erfinder: BROCKHAUS, Hendrik, 85579 Unterbiberg (DE); FURCH, Andreas, 85356 Freising (DE); WONDOLLEK, Kay-Christian, 85764 Oberschleissheim (DE)
(86) Internationale Anmeldenummer: PCT/EP2004/052244
(87) Internationale Veröffentlichungsnummer: WO 2005/033913

(56) Entgegenhaltungen:
- EP-A- 0 686 906
- EP-A- 0 803 789
- EP-A- 1 055 990
- EP-A- 1 076 279
- US-A1- 2003 161 473

## Beschreibung

Die vorliegende Erfindung betrifft ein Verfahren zur Einräumung eines Zugriffs auf ein computerbasiertes Objekt und ein Steuerungsprogramm zur Durchführung des Verfahrens.

Durch unberechtigte Benutzung von Computerprogrammen entstehen weltweit immense Schäden. Um diesem entgegenzuwirken, werden Lösungen zum Schutz von Computerprogrammen vor unberechtigter Benutzung entwickelt.

Eine Übermittlung verschlüsselter Informationen zur Aktivierung eines Computerprogramms dient einer Verhinderung von nicht autorisierten Vervielfältigungen des Computerprogramms. Entsprechende Verfahren dienen beispielsweise außerdem als technische Voraussetzung, um Computerprogramme als Produkte über E-Commerce zu vertreiben. Bei bisher bekannten Verfahren zur Aktivierung von Computerprogrammen werden Computerprogramme anhand jeweils eines Registrierungsschlüssels freigeschaltet. Für eine Freischaltung eines Computerprogramms wird der Registrierungsschlüssel, der einer Computerprogrammlizenz fest zugeordnet ist, manuell eingegeben bzw. von einem Datenträger eingespielt. Insbesondere bei einer Vielzahl von auf unterschiedlichen Computern installierten Computerprogrammen resultiert hieraus ein hoher Addministrationsaufwand, der mit personalintensiven Bedien- und Wartungsarbeiten verbunden ist.

Aus EP 1 076 279 A1 ist ein Verfahren bekannt, bei dem durch ein trusted module (smart card) Integritätsprüfungen und Lizenzprüfungen durch geführt werden.

Aus EP 1 191 419 A2 ist Verfahren bekannt, bei dem vorgebbare Funktionen eines Computerprogramms für eine wählbare Nutzungsdauer durch Modifikation eines Registrierungsschlüsselpaares freigeschaltet werden können. Das Registrierungsschlüsselpaares weist zumindest eine gegenüber Benutzerzugriffen gesperrten Teilinformation auf. Die freizuschaltenden Funktionen müssen nicht notwendigerweise bereits bei einer Erstinstallation des Computerprogramms für eine Freischaltung zur Verfügung gestanden haben, sondern können auch nachträglich hinzugewählt werden. Zur Freischaltung ist kein Einsatz von Bedien- und Wartungspersonal am Ort des Computers erforderlich, auf der das jeweilige Computerprogramm installiert ist.

Bestandteile des Registrierungsschlüsselpaares entsprechend dem in EP 1 191 419 A2 beschriebenen Verfahren sind Applikationsinformationen und ein Applikationswert. Die Applikationsinformationen werden an einem ersten Computer eingegeben, auf der das zu registrierende Computerprogramm installiert ist, bzw. durch den ersten Computer generiert. Der Applikationswert wird in einem zweiten Computer mittels Codierung aus den Applikationsinformationen berechnet.

Bei einer Registrierung eines Computerprogramms oder einer Änderung der Registrierung werden erste Applikationsinformationen mit zumindest einer gegenüber Benutzerzugriffen gesperrten Teilinformation an den zweiten Computer übermittelt. Im zweiten Computer wird aus den ersten Applikationsinformationen ein Applikationswert berechnet, der nachfolgend an den ersten Computer übermittelt wird. Mittels Decodierung werden im ersten Computer aus dem Applikationswert zweite Applikationsinformationen ermittelt. Die ersten und die zweiten Applikationsinformationen werden bei einem Ausführungsbeginn des Computerprogramms auf Übereinstimmung überprüft. In Abhängigkeit der sich bei der Überprüfung ergebenden Abweichungen werden vorgebbare Funktionen des Computerprogramms freigeschaltet.

Der vorliegenden Erfindung liegt die Aufgabe zugrunde ein Verfahren, das einen erhöhten Schutz vor unberechtigter Benutzung von in einer Recheneinrichtung bereitgestellten Ressourcen bietet, sowie eine zur automatisierten Durchführung des Verfahrens geeignete Implementierung anzugeben.

Diese Aufgabe wird erfindungsgemäß durch ein Verfahren mit den in Anspruch 1 und ein Steuerungsprogramm mit den in Anspruch 10 angegebenen Merkmalen gelöst. Vorteilhafte Ausgestaltungen der vorliegenden Erfindung sind in den abhängigen Ansprüchen angegeben.

Erfindungsgemäß resultiert ein erhöhter Schutz vor unberechtigter Benutzung von in einer Recheneinrichtung bereitgestellten Ressourcen daraus, daß als eine Voraussetzung zur Einräumung eines Zugriffs auf ein computerbasiertes Objekt eine Speicherkarte mit einem Programmcodeprozessor und eine Lizenzinformation bereitgestellt werden. Auf der Speicherkarte sind zumindest ein der Speicherkarte zugeordneter öffentlicher und privater Schlüssel sowie ein öffentlicher Schlüssel einer vertrauenswürdigen Instanz abgespeichert. Die Lizenzinformation umfaßt zumindest einen mittels des der Speicherkarte zugeordneten öffentlichen Schlüssels verschlüsselten Lizenzcode und wird an einer den Zugriff auf das computerbasierte Objekt steuernden Recheneinrichtung bereitgestellt. Der verschlüsselte Lizenzcode und eine mittels des privaten Schlüssels der vertrauenswürdigen Instanz digital signierte Angabe einer von der Speicherkarte auszuführenden Funktion zur Entschlüsselung des Lizenzcodes werden an die Speicherkarte übermittelt. Die digitale Signatur der Angabe der von der Speicherkarte auszuführenden Funktion wird nachfolgend überprüft. Bei positivem Überprüfungsergebnis wird die Funktion zur Entschlüsselung des Lizenzcodes durch die Speicherkarte ausgeführt und ein entschlüsselter Lizenzcode an die Recheneinrichtung übermittelt. Der entschlüsselte Lizenzcode wird dann zumindest temporär zum Zugriff auf das computerbasierte Objekt bereitgestellt.

Unter Recheneinrichtung sind beispielsweise ohne Beschränkung der Allgemeinheit dieses Begriffs PCs, Notebooks, Server, PDAs, Mobiltelefone, Geldautomaten, Steuerungsmodule in der Automatisierungs-, Fahrzeug-, Kommunikations- oder Medizintechnik zu verstehen - allgemein Einrichtungen, in denen Computerprogramme ablaufen können. Des weiteren sind computerbasierte Objekte beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Leistungsmerkmale, Funktionen oder Prozeduren, Zugriffsrechte auf Peripheriegeräte sowie auf einem Speichermedium befindliche Daten.

Entsprechend einer vorteilhaften Weiterbildung der vorliegenden Erfindung wird der öffentliche Schlüssel der vertrauenswürdigen Instanz vor Manipulationen geschützt an der Recheneinrichtung bereitgestellt. Außerdem ist die Lizenzinformation mittels eines privaten Schlüssels der vertrauenswürdigen Instanz digital signiert. Die digitale Signatur der Lizenzinformation kann somit in der Recheneinrichtung anhand des öffentlichen Schlüssels der vertrauenswürdigen Instanz überprüft werden. Auf diese Weise kann eine vertrauenswürdige und sichere Übermittlung der Lizenzinformation zur Recheneinrichtung gewährleistet werden.

Vorteilhafterweise umfaßt die Lizenzinformation zusätzlich den der Speicherkarte zugeordneten öffentlichen Schlüssel. Des weiteren wird der entschlüsselte Lizenzcode mittels des der Speicherkarte zugeordneten privaten Schlüssels digital signiert. Die digitale Signatur des entschlüsselten Lizenzcodes kann dann in der Recheneinrichtung anhand des der Speicherkarte zugeordneten öffentlichen Schlüssels überprüft werden. Dies bietet den Vorteil einer gesicherten Übertragung des entschlüsselten Lizenzcodes an die Recheneinrichtung, verbunden mit der Sicherstellung, daß der Lizenzcode tatsächlich mit der zur Entschlüsselung vorgesehenen Speicherkarte entschlüsselt worden ist.

Darüber hinaus kann die mittels des privaten Schlüssels der vertrauenswürdigen Instanz digital signierte Angabe der von der Speicherkarte auszuführenden Funktion zur Entschlüsselung des Lizenzcodes in der Recheneinrichtung aus dem verschlüsseltem Lizenzcode und einem Signatur-Objekt erzeugt werden. Das Signatur-Objekt umfaßt nur einen Signaturanteil eines von der vertrauenswürdigen Instanz signierten Funktionsaufrufs zur Entschlüsselung des Lizenzcodes. Diese Ausgestaltung bietet den Vorteil, daß verfügbare Secure-Messaging-Verfahren für eine Übermittlung eines entsprechenden Funktionsaufrufs verwendet werden können. Ferner kann die Lizenzinformation zusätzlich das Signatur-Objekt umfassen, so daß eine gesicherte Bereitstellung des Signatur-Objektes gewährleistet werden kann.

Entsprechend einer weiteren vorteilhaften Ausgestaltung der vorliegenden Erfindung werden der verschlüsselte Lizenzcode und die mittels des privaten Schlüssels der vertrauenswürdigen Instanz digital signierte Angabe der von der Speicherkarte auszuführenden Funktion über eine gesicherte Kommunikationsverbindung von der Recheneinrichtung über eine Leseeinrichtung an die Speicherkarte übermittelt. Hierdurch werden Manipulationsmöglichkeiten zur unberechtigten Erlangung des Zugriffs auf das computerbasierte Objekt weiter eingeschränkt.

Vorteilhafterweise wird die digitale Signatur der Angabe der von der Speicherkarte auszuführenden Funktion anhand des öffentlichen Schlüssels der vertrauenswürdigen Instanz überprüft. Dies dient einer Verhinderung einer unberechtigten Entschlüsselung des Lizenzcodes.

Gemäß einer weiteren Ausgestaltung der vorliegenden Erfindung wird in der Recheneinrichtung eine Zufallszahl erzeugt und diese an die Speicherkarte übermittelt. Der entschlüsselte Lizenzcode wird dann mittels des der Speicherkarte zugeordneten privaten Schlüssels und der Zufallszahl digital signiert. Die digitale Signatur des entschlüsselten Lizenzcodes wird schließlich in der Recheneinrichtung anhand des der Speicherkarte zugeordneten öffentlichen Schlüssels und der Zufallszahl überprüft. Hierdurch ergibt sich ein wirksamer Wiederholungsschutz, so daß ein Abfangen von zwischen der Speicherkarte und der Recheneinrichtung ausgetauschten Signalen keine wirksamen Manipulationsmöglichkeiten eröffnet.

Entsprechend einer bevorzugten Ausgestaltung der vorliegenden Erfindung werden zur Einräumung des Zugriffs auf das computerbasierte Objekt der entschlüsselte Lizenzcode und ein Überprüfungsprozeßverlauf mit einer jeweiligen Soll-Vorgabe abgeglichen. Dies bietet zusätzliche Sicherheit, da ein Vorliegen des entschlüsselten Lizenzcodes für eine Zugriffsberechtigung alleine nicht mehr ausreichend ist, sondern an einen erfolgreichen Überprüfungsprozeßverlauf gekoppelt ist.

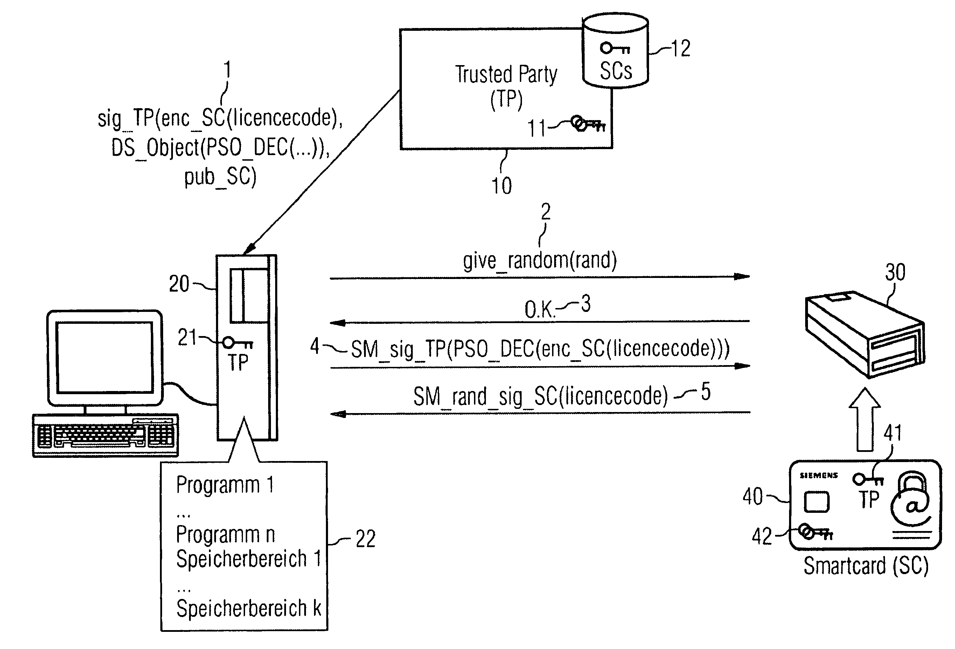

Die vorliegende Erfindung wird nachfolgend an einem Ausführungsbeispiel anhand der Zeichnung näher erläutert.

Es zeigt die Figur eine schematische Darstellung eines Anwendungsumfeldes der vorliegenden Erfindung mit einem Informations- und Meldungsaustausch zwischen einer vertrauenswürdigen Instanz, einer den Zugriff auf ein computerbasiertes Objekt steuernden Recheneinrichtung und einer Speicherkarte mit Programmcodeprozessor.

Das in der Figur dargestellte Anwendungsumfeld der vorliegenden Erfindung umfaßt eine vertrauenswürdige Instanz 10, einen Computer 20, ein mit dem Computer 20 verbundenes Smartcard-Terminal 30, in das eine Smartcard 40 einführbar ist. Die vertrauenswürdige Instanz 10 kann beispielsweise einem Hersteller einer gegen unberechtigten Zugriff zu schützenden Software zugeordnet sein und übernimmt eine Verwaltung von Lizenzen und zu Smartcard zugeordnetem Schlüsselmaterial. Der vertrauenswürdigen Instanz 10 ist ferner ein asymmetrisches Schlüsselpaar 11 zugeordnet, daß einen privaten und einen öffentlichen Schlüssel umfaßt. Zur Abspeicherung des zu Smartcard zugeordnetem Schlüsselmaterial ist eine Datenbasis 12 vorgesehen, welche öffentliche Schlüssel auszuliefernder bzw. bereits ausgelieferter Smartcards enthält.

Durch den Computer 20 werden für einen oder mehrere Benutzer Systemressourcen 22 verfügbar gemacht, die beispielsweise Programme oder Speicherbereiche mit Daten umfassen. Das hier beschriebene Verfahren zur Einräumung eines Zugriffs auf ein computerbasiertes Objekt ist grundsätzlich auf beliebige Systemressourcen anwendbar. Der Computer 20 steuert insbesondere einen Zugriff auf die Systemressourcen 22, die im vorliegenden Fall auch Software des Herstellers umfassen, welchem die vertrauenswürdige Instanz 10 zugeordnet ist. Des weiteren wird der öffentliche Schlüssel 21 der vertrauenswürdigen Instanz 10 vor Manipulation geschützt am Computer 20 bereitgestellt.

Mit dem Computer 20 ist das Smartcard-Terminal 30 über eine gesicherte Kommunikationsverbindung verbunden. Das Smartcard-Terminal 30 dient zum Informations- und Meldungsaustausch zwischen dem Computer 20 und einer in das Smartcard-Terminal 30 einführbaren Smartcard 40, die eine Speicherkarte mit einem Programmcodeprozessor darstellt. Auf der Smartcard 40 ist der öffentliche Schlüssel 41 der vertrauenswürdigen Instanz 10 sowie ein der Smartcard 40 zugeordnetes asymmetrisches Schlüsselpaar 42 abgespeichert, daß einen öffentlichen und einen privaten Schlüssel der Smartcard 40 umfaßt. Außerdem ist auf der Smartcard 40 zumindest ein Programm vorgesehen zur Ver- und Entschlüsselung unter Nutzung des asymmetrischen Schlüsselpaares 42 der Smartcard 40 und zur Verifizierung von mittels des privaten Schlüssels der vertrauenswürdigen Instanz 10 erzeugten Signaturen. Die Verifizierung von Signaturen erfolgt dabei unter Zuhilfenahme des öffentlichen Schlüssel 41 der vertrauenswürdigen Instanz 10. Darüber hinaus verfügt die Smartcard 40 über einen Zufallszahlengenerator und ist vorzugsweise konform zu IFO 7816/4.

Am Computer 20 wird eine von der vertrauenswürdigen Instanz 10 erstellte Lizenzinformation 1 bereitgestellt. Die Lizenzinformation 1 umfaßt einen mittels des der Smartcard 40 zugeordneten öffentlichen Schlüssels verschlüsselten Lizenzcode (enc_SC(licencecode)), den der Smartcard 40 zugeordneten öffentlichen Schlüssel (pub_SC) und ein Signatur-Objekt (DS_Object). Das Signatur-Objekt umfaßt nur einen Signaturanteil eines von der vertrauenswürdigen Instanz 10 signierten Funktionsaufrufs (PSO_DEC - perform security operation mode decrypt) zur Entschlüsselung des Lizenzcodes mittels der Smartcard 40. Des weiteren ist die Lizenzinformation 1 mittels des privaten Schlüssels der vertrauenswürdigen Instanz 10 digital signiert (sig_TP), so daß die digitale Signatur der Lizenzinformation 1 im Computer 20 anhand des öffentlichen Schlüssels 21 der vertrauenswürdigen Instanz 10 überprüft werden kann.

Zur Realisierung eines Wiederholungsschutzes für den Informations- und Meldungsaustausch zwischen dem Computer 20 und dem Smartcard-Terminal 30 bzw. der Smartcard 40 wird im Computer 20 eine Zufallszahl (rand) erzeugt und diese mittels einer Meldung 2 an die Smartcard 40 übermittelt (give_random). Von der Smartcard 40 wird der Empfang der Zufallszahl durch eine Bestätigungsmeldung 3 quittiert. Nachfolgend wird eine Meldung 4 zur Entschlüsselung des Lizenzcodes vom Computer 20 an die Smartcard 40 übermittelt. Die Meldung 4 zur Entschlüsselung des Lizenzcodes umfaßt eine mittels des privaten Schlüssels der vertrauenswürdigen Instanz 10 digital signierte Angabe einer von der Smartcard 40 auszuführenden Funktion zur Entschlüsselung des Lizenzcodes einschließlich des verschlüsselten Lizenzcodes.

Die mittels des privaten Schlüssels der vertrauenswürdigen Instanz 10 digital signierter Angabe der von der Smartcard 40 auszuführenden Funktion zur Entschlüsselung des Lizenzcodes wird im Computer 20 aus dem von der Lizenzinformation 1 umfaßten Signatur-Objekt und dem verschlüsselten Lizenzcode erzeugt. Auf diese Weise wird durch den Computer 20 im Namen der vertrauenswürdigen Instanz 10 ein von der vertrauenswürdigen Instanz 10 signiertes Secure-Messaging-Kommando (SM_sig TP) erstellt, wodurch sichergestellt wird, daß die Angabe der von der Smartcard 40 auszuführenden Funktion zur Entschlüsselung des Lizenzcodes und der verschlüsselte Lizenzcode tatsächlich von der vertrauenswürdigen Instanz 10 ausgestellt worden sind.

Eine Überprüfung der digitalen Signatur der Angabe der von der Smartcard 40 auszuführenden Funktion durch die Smartcard 40 und einer Ausführung der Funktion zur Entschlüsselung des Lizenzcodes durch die Smartcard 40 bei positiven Überprüfungsergebnis zum Schutz vor Manipulationsversuchen durch Bildung eines gemeinsamen funktionalen Kontextes miteinander verknüpft. Insbesondere ist sichergestellt, daß eine Entschlüsselung des Lizenzcodes nur durch eine dafür vorgesehene Smartcard möglich ist.

Nach Ausführung der Funktion zur Entschlüsselung des Lizenzcodes (perform securitiy operation mode decrypt, angewendet auf den mittels des öffentlichen Schlüssels der Smartcard 40 verschlüsselten Lizenzcode) und Entschlüsselung wird der entschlüsselte Lizenzcode unter Anwendung von Secure-Messaging mittels einer Meldung 5 an den Computer 20 übermittelt. Zur Anwendung von Secure-Messaging wird der entschlüsselte Lizenzcode mittels des der Smartcard 40 zugeordneten privaten Schlüssels und der von dem Computer 20 erzeugten Zufallszahl digital signiert (SM_rand_sig_SC). Nach Übermittlung an den Computer 20 wird die digitale Signatur des entschlüsselten Lizenzcodes durch den Computer 20 anhand des der Speicherkarte zugeordneten öffentlichen Schlüssels und der Zufallszahl überprüft. Grundsätzlich wäre es bereits ausreichend, den entschlüsselten Lizenzcode lediglich mittels des der Smartcard 40 zugeordneten Privatschlüssels digital zu signieren und die digitale Signatur anhand des öffentlichen Schlüssels der Smartcard 40 zu überprüfen. Dies würde jedoch einen Verzicht auf den Wiederholschutz bedeuten. Je nach Anwendungsfalle und Sicherheitsanforderungen kann daher eine entsprechende Abwägung angemessener Maßnahmen vorgenommen werden.

Nach Überprüfung der digitalen Signatur des entschlüsselten Lizenzcodes wird dieser zumindest temporär zum Zugriff auf die geschützte Software bzw. ein computerbasiertes Objekt bereitgestellt. Um denkbare Manipulationsmöglichkeiten auszuschließen, sollten der entschlüsselte Lizenzcode und ein Überprüfungsprozeßverlauf mit einer jeweiligen Soll-Vorgabe vor Einräumung des Zugriffs auf die geschützte Software abgeglichen werden. Bei erfolgreichem Abgleich kann dann der Zugriff eingeräumt werden.

Die Steuerung des Ablaufs des Verfahrens zur Einräumung eines Zugriffs auf geschützte Software bzw. ein computerbasiertes Objekt ist durch ein Steuerungsprogramm implementiert, daß in einem Arbeitsspeicher des Computers 20 ladbar ist und zumindest ein Codeabschnitt aufweist, bei dessen Ausführung zunächst eine Übermittlung eines mittels eines einer Speicherkarte mit einem Programmcodeprozessor zugeordneten öffentlichen Schlüssels verschlüsselten Lizenzcode und einer mittels eines privaten Schlüssels einer vertrauenswürdigen Instanz digital signierten Angabe einer von der Speicherkarte auszuführenden Funktion zur Entschlüsselung des Lizenzcodes an die Speicherkarte veranlaßt wird. Ferner wird bei Ausführung des Codeabschnittes eine Überprüfung der digitalen Signatur der Angabe der von der Speicherkarte auszuführenden Funktion durch die Speicherkarte veranlaßt. Die digitale Signatur der Angabe der von der Speicherkarte auszuführenden Funktion wird dabei anhand des öffentlichen Schlüssels der vertrauenswürdigen Instanz überprüft. Bei positivem Überprüfungsergebnis werden dann eine Ausführung der Funktion zur Entschlüsselung des Lizenzcodes durch die Speicherkarte und eine Übermittlung eines verschlüsselten Lizenzcodes an den Computer 20 veranlaßt. Schließlich wird bei Ausführung des Codeabschnittes der entschlüsselte Lizenzcode zumindest temporär zum Zugriff auf das computerbasierte Objekt durch den Computer 20 bereitgestellt, wenn das Steuerungsprogramm im Computer 20 abläuft.

Die Anwendung der vorliegenden Erfindung ist nicht auf das hier beschriebene Ausführungsbeispiel beschränkt.

## Patentansprüche

1. Verfahren zur Einräumung eines Zugriffs auf ein computerbasiertes Objekt, bei dem
- eine Speicherkarte (40) mit einem Programmcodeprozessor bereitgestellt wird, auf der zumindest ein der Speicherkarte zugeordneter öffentlicher und privater Schlüssel (42) sowie ein öffentlicher Schlüssel (41) einer vertrauenswürdigen Instanz abgespeichert sind,
- eine Lizenzinformation, die zumindest einen mittels des der Speicherkarte zugeordneten öffentlichen Schlüssels verschlüsselten Lizenzcode umfaßt, an einer den Zugriff auf das computerbasierte Objekt steuernden Recheneinrichtung bereitgestellt wird,
- der verschlüsselte Lizenzcode und eine mittels des privaten Schlüssels der vertrauenswürdigen Instanz digital signierte Angabe (4) einer von der Speicherkarte auszuführenden Funktion zur Entschlüsselung des Lizenzcodes an die Speicherkarte übermittelt werden,
- die digitale Signatur der Angabe der von der Speicherkarte auszuführenden Funktion überprüft wird,
- bei positivem Überprüfungsergebnis die Funktion zur Entschlüsselung des Lizenzcodes durch die Speicherkarte ausgeführt und ein entschlüsselter Lizenzcode an die Recheneinrichtung übermittelt wird,
- der entschlüsselte Lizenzcode zumindest temporär zum Zugriff auf das computerbasierte Objekt bereitgestellt wird.

2. Verfahren nach Anspruch 1,
bei dem der öffentliche Schlüssel der vertrauenswürdigen Instanz vor Manipulationen geschützt an der Recheneinrichtung bereitgestellt wird, bei dem die Lizenzinformation mittels eines privaten Schlüssels der vertrauenswürdigen Instanz digital signiert ist, und bei dem die digitale Signatur der Lizenzinformation in der Recheneinrichtung anhand des öffentlichen Schlüssels der vertrauenswürdigen Instanz überprüft wird.

3. Verfahren nach einem der Ansprüche 1 oder 2,
bei dem die Lizenzinformation zusätzlich den der Speicherkarte zugeordneten öffentlichen Schlüssel umfaßt, bei dem der entschlüsselte Lizenzcode mittels des der Speicherkarte zugeordneten privaten Schlüssels digital signiert wird, und bei dem die digitale Signatur des entschlüsselten Lizenzcodes in der Recheneinrichtung anhand des der Speicherkarte zugeordneten öffentlichen Schlüssels überprüft wird.

4. Verfahren nach einem der Ansprüche 1 bis 3,
bei dem die mittels des privaten Schlüssels der vertrauenswürdigen Instanz digital signierte Angabe der von der Speicherkarte auszuführenden Funktion zur Entschlüsselung des Lizenzcodes in der Recheneinrichtung aus dem verschlüsseltem Lizenzcode und einem Signatur-Objekt erzeugt wird, das nur einen Signaturanteil eines von der vertrauenswürdigen Instanz signierten Funktionsaufrufs zur Entschlüsselung des Lizenzcodes umfaßt.

5. Verfahren nach Anspruch 4,
bei dem die Lizenzinformation zusätzlich das Signatur-Objekt umfaßt.

6. Verfahren nach einem der Ansprüche 1 bis 5,
bei dem der verschlüsselte Lizenzcode und die mittels des privaten Schlüssels der vertrauenswürdigen Instanz digital signierte Angabe der von der Speicherkarte auszuführenden Funktion über eine gesicherte Kommunikationsverbindung von der Recheneinrichtung über eine Leseeinrichtung an die Speicherkarte übermittelt werden.

7. Verfahren nach einem der Ansprüche 1 bis 6,
bei dem die digitale Signatur der Angabe der von der Speicherkarte auszuführenden Funktion anhand des öffentlichen Schlüssels der vertrauenswürdigen Instanz überprüft wird.

8. Verfahren nach einem der Ansprüche 1 bis 7,
bei dem in der Recheneinrichtung eine Zufallszahl erzeugt und diese an die Speicherkarte übermittelt wird, bei dem der entschlüsselte Lizenzcode mittels des der Speicherkarte zugeordneten privaten Schlüssels und der Zufallszahl digital signiert wird, und bei dem die digitale Signatur des entschlüsselten Lizenzcodes in der Recheneinrichtung anhand des der Speicherkarte zugeordneten öffentlichen Schlüssels und der Zufallszahl überprüft wird.

9. Verfahren nach einem der Ansprüche 1 bis 8,
bei dem zur Einräumung des Zugriffs auf das computerbasierte Objekt der entschlüsselte Lizenzcode und ein Überprüfungsprozeßverlauf mit einer jeweiligen Soll-Vorgabe abgeglichen werden.

10. Steuerungsprogramm, das in einen Arbeitsspeicher einer Recheneinrichtung (20) ladbar ist und zumindest einen Codeabschnitt aufweist, bei dessen Ausführung
- eine Übermittlung eines mittels eines einer Speicherkarte (40) mit einem Programmcodeprozessor zugeordneten öffentlichen Schlüssels verschlüsselten Lizenzcodes und einer mittels eines privaten Schlüssels einer vertrauenswürdigen Instanz digital signierten Angabe (4) einer von der Speicherkarte auszuführenden Funktion zur Entschlüsselung des Lizenzcodes an die Speicherkarte veranlaßt wird,
- eine Überprüfung der digitalen Signatur der Angabe der von der Speicherkarte auszuführenden Funktion durch die Speicherkarte veranlaßt wird,
- bei positivem Überprüfungsergebnis eine Ausführung der Funktion zur Entschlüsselung des Lizenzcodes durch die Speicherkarte und eine Übermittlung eines entschlüsselten Lizenzcodes an die Recheneinrichtung veranlaßt werden,
- der entschlüsselte Lizenzcode zumindest temporär zum Zugriff auf das computerbasierte Objekt durch die Recheneinrichtung bereitgestellt wird,
wenn das Steuerungsprogramm in der Recheneinrichtung abläuft.

## Claims

1. Method for granting access to a computer-based object, wherein
- a memory card (40) comprising a program code processor is provided, at least one public and private key (42) that is allocated to the memory card as well as a public key (41) of a trusted entity being stored on said memory card,
- a piece of licence information comprising at least one licence code which is encrypted by means of the public key allocated to the memory card is provided on an arithmetic unit that controls access to the computer-based object,
- the encrypted licence code and a declaration (4), digitally signed by means of the private key of the trusted entity, of a function for decoding the licence code to be executed by the memory card, are transmitted to the memory card,
- the digital signature of the declaration of the function to be executed by the memory card is checked,
- if the result of the check is positive, the function for decoding the licence code is executed by the memory card and a decrypted licence code is transmitted to the arithmetic unit,
- the decrypted licence code is provided at least temporarily for accessing the computer-based object.

2. Method according to claim 1,
wherein the public key of the trusted entity is provided, protected against manipulation, on the arithmetic unit,
wherein the licence information is digitally signed by means of a private key of the trusted entity and wherein the digital signature of the licence information is checked in the arithmetic unit with the aid of the public key of the trusted entity.

3. Method according to any one of claims 1 or 2,
wherein the licence information additionally comprises the public key allocated to the memory card, wherein the decrypted licence code is digitally signed by means of the private key allocated to the memory card and wherein the digital signature of the decrypted licence code is checked in the arithmetic unit with the aid of the public key allocated to the memory card.

4. Method according to any one of claims 1 to 3,
wherein the declaration, digitally signed by means of the private key of the trusted entity, of the function for decoding the licence code to be executed by the memory card is generated in the arithmetic unit from the encrypted licence code and a signature object which comprises only a signature portion of a function call, signed by the trusted entity, for decoding the licence code.

5. Method according to claim 4,
wherein the piece of licence information additionally comprises the signature object.

6. Method according to any one of claims 1 to 5,
wherein the encrypted licence code and the declaration, digitally signed by means of the private key of the trusted entity, of the function to be executed by the memory card is transmitted over a secure communication link from the arithmetic unit via a reading device to the memory card.

7. Method according to any one of claims 1 to 6,
wherein the digital signature of the declaration of the function to be executed by the memory card is checked with the aid of the public key of the trusted entity.

8. Method according to any one of claims 1 to 7,
wherein a random number is generated in the arithmetic unit and this random number is transmitted to the memory card,
wherein the decrypted licence code is digitally signed by means of the private key allocated to the memory card and by means of the random number, and wherein the digital signature of the decrypted licence code is checked in the arithmetic unit with the aid of the public key allocated to the memory card and with the aid of the random number.

9. Method according to any one of claims 1 to 8,
wherein, in order to grant access to the computer-based object, the decrypted licence code and progress of a checking process are matched with a respective set default.

10. Control program which can be loaded into a working memory of an arithmetic unit (20) and has at least one code section, upon execution of which
- a transmission of a licence code encrypted by means of a public key allocated to a memory card (40) comprising a program code processor and of a declaration (4), digitally signed by means of a private key of a trusted entity, of a function for decoding the licence code to be executed by the memory card, to the memory card is prompted,
- a checking of the digital signature of the declaration of the function to be executed by the memory card is prompted by the memory card,
- if the result of the check is positive, an execution of the function for decoding the licence code by the memory card and a transmission of a decrypted licence code to the arithmetic unit are prompted,
- the decrypted licence code is provided at least temporarily for access to the computer-based object by the arithmetic unit,
if the control program is running in the arithmetic unit.

## Revendications

1. Procédé d'autorisation d'un accès à un objet informatique, dans lequel
- une carte mémoire (40) dotée d'un processeur de code de programme et sur laquelle sont enregistrées au moins une clé publique et privée (42) associée à la carte mémoire et une clé publique (41) d'une instance digne de confiance est mise à disposition,
- une information de licence comprenant au moins un code de licence chiffré au moyen de la clé publique associée à la carte mémoire est fournie à un dispositif de calcul commandant l'accès à l'objet informatique,
- le code de licence chiffré et une indication (4), signée numériquement au moyen de la clé privée de l'instance digne de confiance, d'une fonction de déchiffrage du code de licence devant être exécutée par la carte mémoire sont transmis à la carte mémoire,
- la signature numérique de l'indication de la fonction devant être exécutée par la carte mémoire est vérifiée,
- en cas de résultat positif de la vérification, la fonction de déchiffrage du code de licence est exécutée par la carte mémoire et un code de licence déchiffré est transmis au dispositif de calcul,
- le code de licence déchiffré est mis à disposition, au moins temporairement, pour accéder à l'objet informatique.

2. Procédé selon la revendication 1,
dans lequel la clé publique de l'instance digne de confiance, protégée des manipulations, est fournie au dispositif de calcul, dans lequel l'information de licence est signée numériquement au moyen d'une clé privée de l'instance digne de confiance et dans lequel la signature numérique de l'information de licence est vérifiée dans le dispositif de calcul grâce à la clé publique de l'instance digne de confiance.

3. Procédé selon l'une des revendications 1 ou 2,
dans lequel l'information de licence comprend, en plus, la clé publique associée à la carte mémoire,
dans lequel le code de licence déchiffré est signé numériquement au moyen de la clé privée associée à la carte mémoire et dans lequel la signature numérique du code de licence déchiffré est vérifiée dans le dispositif de calcul grâce à la clé publique associée à la carte mémoire.

4. Procédé selon l'une des revendications 1 à 3,
dans lequel l'indication, signée numériquement au moyen de la clé privée de l'instance digne de confiance, de la fonction de déchiffrage du code de licence devant être exécutée par la carte mémoire est produite dans le dispositif de calcul à partir du code de licence chiffré et d'un objet de signature ne comprenant qu'une partie de signature d'un appel de fonction de déchiffrage du code de licence signé par l'instance digne de confiance.

5. Procédé selon la revendication 4,
dans lequel l'information de licence comprend, en plus, l'objet de signature.

6. Procédé selon l'une des revendications 1 à 5,
dans lequel le code de licence chiffré et l'indication, signée numériquement au moyen de la clé privée de l'instance digne de confiance, de la fonction devant être exécutée par la carte mémoire sont transmis à la carte mémoire par le dispositif de calcul par le biais d'un dispositif de lecture sur une liaison de communication sécurisée.

7. Procédé selon l'une des revendications 1 à 6,
dans lequel la signature numérique de l'indication de la fonction devant être exécutée par la carte mémoire est vérifiée grâce à la clé publique de l'instance digne de confiance.

8. Procédé selon l'une des revendications 1 à 7,
dans lequel un chiffre aléatoire est produit dans le dispositif de calcul et transmis à la carte mémoire,
dans lequel le code de licence déchiffré est signé numériquement au moyen de la clé privée associée à la carte mémoire et du chiffre aléatoire et dans lequel la signature numérique du code de licence déchiffré est vérifiée dans le dispositif de calcul grâce à la clé publique associée à la carte mémoire et au chiffre aléatoire.

9. Procédé selon l'une des revendications 1 à 8,
dans lequel, pour autoriser l'accès à l'objet informatique, le code de licence déchiffré et une procédure de vérification sont comparés à une spécification de consigne respective.

10. Programme de commande pouvant être chargé dans une mémoire de travail d'un dispositif de calcul (20) et comprenant au moins un segment de code dont l'exécution
- entraîne une transmission à la carte mémoire d'un code de licence chiffré au moyen d'une clé publique associée à une carte mémoire (40) dotée d'un processeur de code de programme et d'une indication (4), signée numériquement au moyen d'une clé privée d'une instance digne de confiance, d'une fonction de déchiffrage du code de licence devant être exécutée par la carte mémoire,
- entraîne une vérification par la carte mémoire de la signature numérique de l'indication de la fonction devant être exécutée par la carte mémoire,
- entraîne, en cas de résultat positif de la vérification, une exécution de la fonction de déchiffrage du code de licence par la carte mémoire et une transmission d'un code de licence déchiffré au dispositif de calcul,
- entraîne une mise à disposition par le dispositif de calcul, au moins temporairement, du code de licence déchiffré pour accéder à l'objet informatique,
lorsque le programme de commande se déroule dans le dispositif de calcul.
